(19) **Europäisches Patentamt / European Patent Office / Office européen des brevets**

(11) **EP 4 184 785 A1**

(12) # EUROPEAN PATENT APPLICATION
published in accordance with Art. 153(4) EPC

(43) Date of publication:
**24.05.2023 Bulletin 2023/21**

(21) Application number: **20947691.0**

(22) Date of filing: **30.07.2020**

(51) International Patent Classification (IPC):
**H02P 21/14** (2016.01)   **G06F 30/00** (2020.01)

(52) Cooperative Patent Classification (CPC):
**G06F 30/00; H02P 21/14**

(86) International application number:
**PCT/CN2020/105791**

(87) International publication number:
**WO 2022/021210 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Huawei Digital Power Technologies Co., Ltd.**
  **Shenzhen, Guangdong 518043 (CN)**
• **Shanghai Jiao Tong University**
  **Shanghai 200240 (CN)**

(72) Inventors:
• **WANG, Jiangang**
  **Shenzhen, Guangdong 518129 (CN)**

• **ZHOU, Fei**
  **Shanghai 200240 (CN)**
• **DONG, Tenghui**
  **Shanghai 200240 (CN)**
• **ZHU, Chong**
  **Shanghai 200240 (CN)**
• **ZHANG, Xi**
  **Shanghai 200240 (CN)**
• **LI, Quanming**
  **Shenzhen, Guangdong 518129 (CN)**
• **CHEN, Jun**
  **Shenzhen, Guangdong 518129 (CN)**

(74) Representative: **Körber, Martin Hans**
**Mitscherlich PartmbB**
**Patent- und Rechtsanwälte**
**Sonnenstraße 33**
**80331 München (DE)**

(54) **METHOD AND DEVICE FOR PREDICTING TEMPERATURE**

(57)   A temperature prediction method and apparatus are provided. The method includes: determining a loss of a motor based on information about a motor controller, where the loss of the motor includes a first loss and a second loss, and the first loss is a loss generated by a fundamental wave component of a current of the motor (S210); and determining temperature of the motor based on the loss of the motor and a temperature prediction model (S220). According to the method, precision of temperature prediction of the motor can be improved.

Determine a loss of a motor based on information about a motor controller, where the loss of the motor includes a first loss and a second loss, and the first loss is a loss generated by a fundamental wave component of a current of the motor — S210

Determine temperature of the motor based on the loss of the motor and a temperature prediction model — S220

FIG. 2

**Description**

**TECHNICAL FIELD**

This application relates to the field of motors, and more specifically, to a temperature prediction method and apparatus.

**BACKGROUND**

In recent years, with continuous pursuit of a high speed and miniaturization of a powertrain in the automotive field, thermal loss density of a motor greatly increases. On the one hand, when the motor repeatedly accelerates in an area with a high rotation speed, magnetic steel of the motor is at a risk of over-temperature due to accumulation of temperature rises. On the other hand, when the motor runs at peak power, a coil of the motor is at a risk of over-temperature. Excessively high temperature of the motor may cause problems such as burnout of a winding, and demagnetization of magnetic steel of a rotor

Therefore, temperature of the motor needs to be predicted in real time, and corresponding cooling processing needs to be performed. If corresponding cooling processing is not performed, the motor has problems such as an over-temperature risk and excessively large redundancy of thermal design.

Therefore, how to precisely predict temperature of the foregoing nodes of the motor becomes a problem that needs to be urgently resolved.

**SUMMARY**

This application provides a temperature prediction method and apparatus, to improve precision of temperature prediction of a motor.

According to a first aspect, a temperature prediction method is provided, including: determining a loss of a motor based on information about a motor controller, where the loss of the motor includes a first loss and a second loss, and the first loss is a loss generated by a fundamental wave component of a current of the motor; and determining temperature of the motor based on the loss of the motor and a temperature prediction model.

In the technical solution, in addition to the loss generated by the fundamental wave component of the current of the motor, the determined loss of the motor further includes another loss (such as the second loss). In this way, calculation precision of the loss of the motor can be improved, thereby improving prediction precision of the temperature of the motor.

In a possible implementation, the second loss is a loss generated by a harmonic wave component of the current of the motor.

In the technical solution, the harmonic wave component of the current also causes an obvious increase in the loss of the motor. Therefore, both a fundamental wave and a harmonic wave of the current may be included in calculation of the loss of the motor. A total loss of the motor is obtained by calculating losses of the fundamental wave and the harmonic wave that are of the motor, to improve calculation precision of the loss of the motor, thereby improving prediction accuracy of the temperature of the motor.

In another possible implementation, the first loss is determined based on the fundamental wave component of the current, and the loss of the motor is obtained based on the first loss and a first coefficient.

In the technical solution, the loss of the motor may be directly determined based on the first loss generated by the fundamental wave component of the current, which is relatively simple to implement.

In another possible implementation, the first loss is determined based on the fundamental wave component of the current; the second loss is determined based on the harmonic wave component of the current; and the loss of the motor is obtained based on the first loss and the second loss.

In another possible implementation, the information about the motor controller is a voltage vector in a dq rotating coordinate system.

Before the first loss is determined based on the harmonic wave component of the current, the method further includes: obtaining the voltage vector in the dq rotating coordinate system from the motor controller; obtaining a harmonic wave component of a voltage based on the voltage vector in the dq rotating coordinate system; and obtaining the harmonic wave component of the current based on the harmonic wave component of the voltage.

In another possible implementation, the temperature of the motor is temperature of the motor at a moment t, and the method further includes: correcting the loss of the motor based on the temperature of the motor at the moment t to obtain a corrected loss of the motor; and determining temperature of the motor at a moment (t+1) based on the corrected loss of the motor, the temperature of the motor at the moment t, and the temperature prediction model, where the moment t is a previous moment of the moment (t+1).

In the technical solution, a loss of the motor at the moment (t+1) may be corrected based on the temperature of the motor at the moment t, and the temperature of the motor at the moment (t+1) is determined based on a corrected loss at the moment (t+1), thereby further improving prediction precision of the temperature of the motor.

In another possible implementation, the loss of the motor includes one or more of the following: a coil loss of the motor, a stator/rotor loss of the motor, and a magnetic steel loss of the motor.

In another possible implementation, the temperature of the motor at the moment t includes one or more of the following: coil temperature of the motor at the moment t, stator/rotor temperature of the motor at the moment t, and magnetic steel temperature of the motor at the moment t.

In another possible implementation, the temperature prediction model is any one of the following: an equivalent thermal resistance network model, a neural network model, a linear least squares model, and a nonlinear least squares model.

According to a second aspect, a temperature prediction apparatus is provided, including:

> a loss calculation module, configured to determine a loss of a motor based on information about a motor controller, where the loss of the motor includes a first loss and a second loss, and the first loss is a loss generated by a fundamental wave component of a current of the motor; and
> a temperature prediction module, configured to determine temperature of the motor based on the loss of the motor and a temperature prediction model.

In a possible implementation, the second loss is a loss generated by a harmonic wave component of the current of the motor

In another possible implementation, the loss calculation module is specifically configured to determine the first loss based on the fundamental wave component of the current; and obtain the loss of the motor based on the first loss and a first coefficient.

In another possible implementation, the loss calculation module is specifically configured to determine the first loss based on the fundamental wave component of the current; determine the second loss based on the harmonic wave component of the current; and obtain the loss of the motor based on the first loss and the second loss.

In another possible implementation, the information about the motor controller is a voltage vector in a dq rotating coordinate system. The prediction apparatus further includes:

> an obtaining module, configured to obtain the voltage vector in the dq rotating coordinate system from the motor controller;
> a voltage harmonic wave analysis module, configured to obtain a harmonic wave component of a voltage based on the voltage vector in the dq rotating coordinate system; and
> a current harmonic wave analysis module, configured to obtain the harmonic wave component of the current based on the harmonic wave component of the voltage.

In another possible implementation, the temperature of the motor is temperature of the motor at a moment t. The loss calculation module is further configured to correct the loss of the motor based on the temperature of the motor at the moment t to obtain a corrected loss of the motor. The temperature prediction module is further configured to determine temperature of the motor at a moment (t+1) based on the corrected loss of the motor, the temperature of the motor at the moment t, and the temperature prediction model. The moment t is a previous moment of the moment (t+1).

In another possible implementation, the loss of the motor includes one or more of the following: a coil loss of the motor, a stator/rotor loss of the motor, and a magnetic steel loss of the motor

In another possible implementation, the temperature of the motor at the moment t includes one or more of the following: coil temperature of the motor at the moment t, stator/rotor temperature of the motor at the moment t, and magnetic steel temperature of the motor at the moment t.

In another possible implementation, the temperature prediction model is any one of the following: an equivalent thermal resistance network model, a neural network model, a linear least squares model, and a nonlinear least squares model.

It should be understood that extension, limitation, explanation, and description of related content in the foregoing first aspect are also applicable to same content in the second aspect.

According to a third aspect, an apparatus is provided, including: a memory, configured to store a program; and a processor, configured to perform the program stored in the memory. When the program stored in the memory is performed, the processor is configured to perform the following: determining a loss of a motor based on information about a motor controller, where the loss of the motor includes a first loss and a second loss, and the first loss is a loss generated by a fundamental wave component of a current of the motor; and determining temperature of the motor based on the loss of the motor and a temperature prediction model.

In a possible implementation, the second loss is a loss generated by a harmonic wave component of the current of the motor

In another possible implementation, the first loss is determined based on the fundamental wave component of the current, and the loss of the motor is obtained based on the first loss and a first coefficient.

In another possible implementation, the first loss is determined based on the fundamental wave component of the current; the second loss is determined based on the harmonic wave component of the current; and the loss of the motor is obtained based on the first loss and the second loss.

In another possible implementation, the information about the motor controller is a voltage vector in a dq rotating coordinate system.

Before the first loss is determined based on the harmonic wave component of the current, the method further includes: obtaining the voltage vector in the dq rotating coordinate system from the motor controller; obtaining a harmonic wave component of a voltage based on the voltage vector in the dq rotating coordinate system; and obtaining the harmonic wave component of the current based on the harmonic wave component of the voltage.

In another possible implementation, the temperature of the motor is temperature of the motor at a moment t, and the method further includes: correcting the loss of the motor based on the temperature of the motor at the moment t to obtain a corrected loss of the motor; and determining temperature of the motor at a moment (t+1) based on the corrected loss of the motor, the temperature of the motor at the moment t, and the temperature prediction model, where the moment t is a previous moment of the moment (t+1).

In another possible implementation, the loss of the motor includes one or more of the following: a coil loss of the motor, a stator/rotor loss of the motor, and a magnetic steel loss of the motor

In another possible implementation, the temperature of the motor at the moment t includes one or more of the following: coil temperature of the motor at the moment t, stator/rotor temperature of the motor at the moment t, and magnetic steel temperature of the motor at the moment t.

In another possible implementation, the temperature prediction model is any one of the following: an equivalent thermal resistance network model, a neural network model, a linear least squares model, and a nonlinear least squares model.

According to a fourth aspect, a computer storage medium is provided, where the computer storage medium stores program code, and the program code includes instructions used to perform steps in the method in the first aspect and any one of the implementations of the first aspect.

The storage medium may be specifically a non-volatile storage medium.

The computer- readable storage medium includes but is not limited to one or more of the following: a read-only memory (read-only memory, ROM), a programmable ROM (PROM), an erasable PROM (EPROM), a Flash, an electrically EPROM (EEPROM), and a hard drive.

According to a fifth aspect, a chip is provided, where the chip includes a processor and a data interface. The processor reads, by using the data interface, instructions stored in a memory, and performs the method in the first aspect and any one of the implementations of the first aspect.

In a specific implementation process, the chip may be implemented in a form of a central processing unit (CPU), a micro controller unit (MCU), a micro processing unit (MPU), a digital signal processor (DSP), a system on chip (SoC), an application-specific integrated circuit (ASIC), a field programmable gate array (FPGA), or a programmable logic device (PLD).

Optionally, as an implementation, the chip may further include a memory. The memory stores instructions. The processor is configured to execute the instructions stored in the memory. When the instructions are executed, the processor is configured to perform the method in the first aspect and any one of the implementations of the first aspect.

According to a sixth aspect, a powertrain is provided, including the temperature prediction apparatus in the second aspect and any one of the possible implementations of the second aspect.

According to a seventh aspect, a vehicle is provided, including the temperature prediction apparatus in the second aspect and any one of the possible implementations of the second aspect.

**BRIEF DESCRIPTION OF DRAWINGS**

FIG. 1 is a schematic diagram of a structure of a vehicle according to an embodiment of this application;
FIG. 2 is a schematic flowchart of a temperature prediction method according to an embodiment of this application;
FIG. 3 is a schematic block diagram of a temperature prediction apparatus according to an embodiment of this application;
FIG. 4 is a schematic flowchart of another temperature prediction method according to an embodiment of this application; and

FIG. 5 is a schematic diagram of a hardware structure of a temperature prediction apparatus 800 according to an embodiment of this application.

## DESCRIPTION OF EMBODIMENTS

The following describes technical solutions of this application with reference to the accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, the word such as "example" or "for example" in embodiments of this application is used to represent giving an example, an illustration, or a description. Any embodiment or design scheme described as an "example" in this application should not be explained as being more preferred or having more advantages than another embodiment or design scheme. Specifically, use of the word "example" is intended to present a concept in a specific manner.

In the embodiments of this application, "corresponding (corresponding, relevant)" and "corresponding (corresponding)" may be sometimes used in a mixed manner. It should be noted that, when a difference is not emphasized, meanings to be expressed by them are the same.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to similar technical problems.

Reference to "an embodiment", "some embodiments", or the like described in this specification means that specific characteristics, structures, or features described with reference to the embodiment are included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

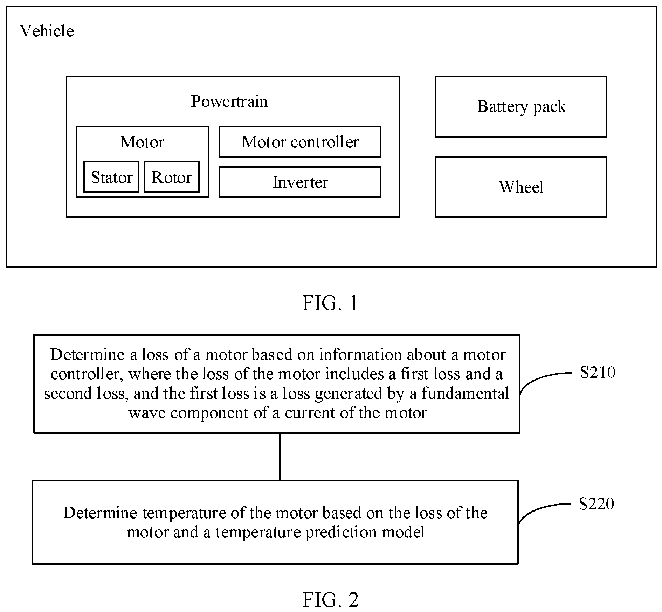

For ease of description, a structure of a vehicle is first described below with reference to FIG. 1.

FIG. 1 is a schematic diagram of a structure of a vehicle according to an embodiment of this application. As shown in FIG. 1, the vehicle may include but is not limited to one or more powertrains, a battery pack, and a wheel.

The powertrain may include but is not limited to a motor, a motor controller, and an inverter. The motor is an apparatus configured to implement mutual conversion between electric energy and mechanical energy, and includes two parts: a stator and a rotor. The stator of the motor is a motionless part of the motor, and includes three parts: an iron core of the stator, a winding of the stator, and a stand. A main function of the stator is to generate a rotating magnetic field. The rotor of the motor is a rotating part of the motor, and a main function of the rotor is to be cut by a magnetic line in the rotating magnetic field to generate (output) a current.

In a whole system, the motor controller first controls the inverter to convert a direct current (DC) into an alternating current (AC). This component has a specific energy loss due to conversion efficiency, and this part of loss is converted into heat. In addition, the AC current enters the motor and is converted into mechanical energy through electromagnetic induction for rotation of the motor. In this process, thermal energy is also generated due to conversion efficiency. Finally, a high rotation speed of the motor is reduced by a reducer, and this part of conversion still causes a loss. All the foregoing three parts of heat generated due to energy conversion needs to be discharged from the powertrain in time through heat dissipation.

It should be understood that the motor controller and the inverter may be integrated into one device or may be two independent devices. This is not specifically limited in this application.

In the process in which the motor controller controls the inverter to convert a DC current into an AC current, in addition to generating a component sine wave (that is, a fundamental wave current, where a corresponding frequency is referred to as a fundamental wave frequency) whose frequency is the same as a reference voltage frequency in instructions of the controller, signals of other frequencies (for example, a high-order harmonic wave current of another frequency, where a frequency of the current is related to a fundamental wave frequency and a PWM carrier frequency, and is referred to as a harmonic wave frequency) are inevitably generated. These signals also cause an obvious increase in a loss of the motor. Therefore, the foregoing loss includes both a loss generated by the fundamental wave current and a loss generated by the signals of other frequencies.

In recent years, with continuous pursuit of a high speed and miniaturization of a powertrain in the automotive field, thermal loss density of a motor greatly increases. On the one hand, when the motor repeatedly accelerates in an area with a high rotation speed, magnetic steel of the motor is at a risk of over-temperature due to accumulation of temperature rises. On the other hand, when the motor runs at peak power, a coil of the motor is at a risk of over-temperature. Excessively high temperature of the motor may cause problems such as burnout of a winding, and demagnetization of magnetic steel of a rotor.

Therefore, in the working condition, temperature of the motor needs to be predicted in real time, and corresponding cooling processing needs to be performed. If corresponding cooling processing is not performed, the motor has problems such as an over-temperature risk and excessively large redundancy of thermal design.

In a related technical solution, a loss (also referred to as a fundamental wave loss) of the motor is calculated based on only a fundamental wave current, and the temperature of the motor is predicted in real time based on a fundamental wave loss. A signal of another frequency (such as a harmonic wave current) also causes a loss of the motor. Therefore, when the loss of the motor is calculated based on only the fundamental wave current, calculation precision of the loss of the motor is relatively low. Reduced calculation precision of the loss of the motor reduces prediction precision of the temperature of the motor.

For this reason, an embodiment of this application provides a temperature prediction method. A fundamental wave of a current and a signal of another frequency both are included in calculation of a loss of a motor, and a total loss of the motor is obtained by calculating a fundamental wave loss of the motor and a loss of the another frequency, to improve calculation precision of a loss of the motor, thereby improving prediction accuracy of temperature of the motor.

A temperature prediction method provided in an embodiment of this application is described below in detail with reference to FIG. 2. As shown in FIG. 2, the method may include steps 210 to 220. Steps 210 to 220 are separately described below in detail.

Step 210: Determine a loss of a motor based on information about a motor controller, where the loss of the motor includes a first loss and a second loss, and the first loss is a loss generated by a fundamental wave component of a current of the motor.

The second loss in this embodiment of this application may be a loss generated by another signal of the motor, and the another signal of the motor may be, for example, a harmonic wave component of the current of the motor. As an example, the second loss may be a loss generated by the harmonic wave component of the current of the motor.

The information about the motor controller may alternatively be referred to as output information of the motor controller. There may be a plurality of types of output information of the motor controller. This is not specifically limited in this application. For example, the output information of the motor controller includes components $u_d$ and $u_q$ of a voltage vector in a dq rotating coordinate system. For another example, the output information of the motor controller includes components $i_d$ and $i_q$ of a current vector in the dq rotating coordinate system.

Step 220: Determine temperature of the motor based on the loss of the motor and a temperature prediction model.

The temperature prediction model is not specifically limited in this embodiment of this application, provided that corresponding temperature of the motor can be output based on an input loss of the motor. Several possible temperature prediction models are separately described below in detail.

In a possible implementation, the temperature prediction model is an equivalent thermal resistance network model. The equivalent thermal resistance network model makes a thermal circuit model to be equivalent to a circuit model. As an example, the motor may be subdivided into unit nodes. There is heat transfer between the nodes, and all the nodes are connected by heat resistance. Heat capacity is added to the node to form a thermal resistance network of the motor. Each node is considered as a thermal unit with a lumped parameter. For a connection of each unit, the equivalent thermal resistance network model may establish a thermal balance equation by using Kirchhoff's current law (Kirchhoff's current law, KCL) and Kirchhoff's voltage law (Kirchhoff s voltage law, KVL). Temperature of the node of the motor in the thermal resistance network may be obtained by calculating "node loss of the motor+thermal balance equation".

In another possible implementation, the temperature prediction model is a neural network model. The neural network model may also be referred to as an artificial neural network model, and is a neural network that simulates a human brain. The neural network mathematically abstracts a neuron network in the human brain from a perspective of information processing, establishes a mathematical model, and forms different networks based on different connection manners, thereby implementing a machine learning model of quasi-artificial intelligence. The artificial neural network model may use a loss value of the motor as input to calculate and output a temperature value that needs to be measured for the motor

In another possible implementation, the temperature prediction model is a least squares model. The least squares model may be linear, or may be nonlinear. This is not specifically limited in this application. The least squares model is a model that establishes a fitting relationship between an input loss of the motor and input temperature of the motor by using a least squares algorithm. The fitting relationship is divided into two types: a linear fitting relationship and a nonlinear fitting relationship. After the fitting relationship is established by the least squares model, a temperature value that needs to be measured for the motor may be calculated by using the model.

In the technical solution, in addition to the loss generated by the fundamental wave component of the current of the motor, the determined loss of the motor further includes another loss (such as the second loss generated by another signal). In this way, calculation precision of the loss of the motor can be improved, thereby improving prediction precision of the temperature of the motor.

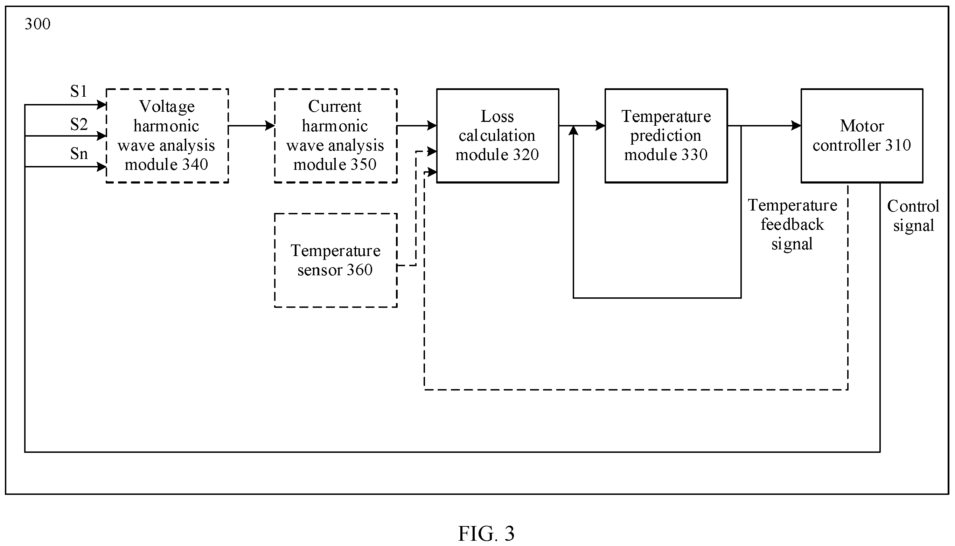

With reference to FIG. 3, the following provides a detailed description of a temperature prediction apparatus of the motor by using an example in which the second loss is a loss generated by a fundamental wave component of a current of the motor. It should be understood that the example in FIG. 3 is merely intended to help a person skilled in the art understand embodiments of this application, and is not intended to limit embodiments of this application to a specific value or a specific scenario in FIG. 3. A person skilled in the art clearly can make various equivalent modifications or changes according to the examples described above, and such modifications or changes also fall within the scope of embodiments of this application.

As shown in FIG. 3, a temperature prediction apparatus 300 may include a motor controller 310, a loss calculation module 320, and a temperature prediction module 330.

Optionally, the temperature prediction apparatus 300 may further include a voltage harmonic wave analysis module 340 and a current harmonic wave analysis module 350.

Optionally, the temperature prediction apparatus 300 may further include a temperature sensor 360.

Functions of modules in the temperature prediction apparatus 300 are separately described below in detail.

The motor controller 310 is configured to output a plurality of signals, for example, S1, S2, , and Sn shown in FIG. 3. The plurality of signals may be corresponding to the foregoing information about the motor controller.

As an example, a control signal output by the motor controller 310 may include but is not limited to components $u_d$ and $u_q$ of a voltage vector in a dq rotating coordinate system, components $i$ and $i_q$ of a current vector in the dq rotating coordinate system, a direct-current bus voltage $U_{dc}$, a carrier frequency, and the like.

It should be understood that if a d-axis is positioned in a magnetic chain of a rotor, a q-axis overlaps a direction of torque.

The voltage harmonic wave analysis module 340 is configured to perform, based on a carrier frequency, Fourier decomposition on the control signal (for example, the components $u_d$ and $u_q$ of the voltage vector in the dq rotating coordinate system) that is output by the motor controller 310, to obtain the sum $u_{ao}^k$ of amplitude values of harmonic wave voltages at frequencies in an abc stationary coordinate system, and convert $u_{ao}^k$ into calculated values $\tilde{u}_d^k$ and $\tilde{u}_q^k$ of a harmonic wave voltage component in the dq rotating coordinate system.

The current harmonic wave analysis module 350 is configured to determine, based on the calculated values $\tilde{u}_d^k$ and $\tilde{u}_q^k$ that are output by the voltage harmonic wave analysis module 340 and that are of the harmonic wave voltage component in the dq rotating coordinate system, amplitude values $i_{ao}^k$ of a harmonic wave current at k times of harmonic wave frequencies.

The loss calculation module 320 is configured to determine a loss of the motor.

In this embodiment of this application, the loss of the motor may include any one or combination of a plurality of the following: a coil loss of the motor, a stator/rotor loss of the motor, a magnetic steel loss of the motor, and the like.

As one example, if input of the loss calculation module 320 is the control signal output by the motor controller 310, the loss calculation module 320 may determine the loss of the motor based on the control signal output by the motor controller 310.

As another example, if input of the loss calculation module 320 is the amplitude values $i_{ao}^k$ that are of the harmonic wave current at the k times of harmonic wave frequencies and that are output by the current harmonic wave analysis module 350, the loss calculation module 320 may determine the loss of the motor based on the amplitude values $i_{ao}^k$ output by the current harmonic wave analysis module 350

It should be understood that, in this embodiment of this application, the loss of the motor may include both a loss generated by a fundamental wave and a loss generated by a harmonic wave.

The temperature prediction module 330 is configured to determine temperature of each part of the motor based on the loss that is of the motor and that is output by the loss calculation module 320.

In this embodiment of this application, the temperature of each part of the motor may include any one or combination of a plurality of the following: coil temperature of the motor, stator/rotor temperature of the motor, magnetic steel temperature of the motor, and the like.

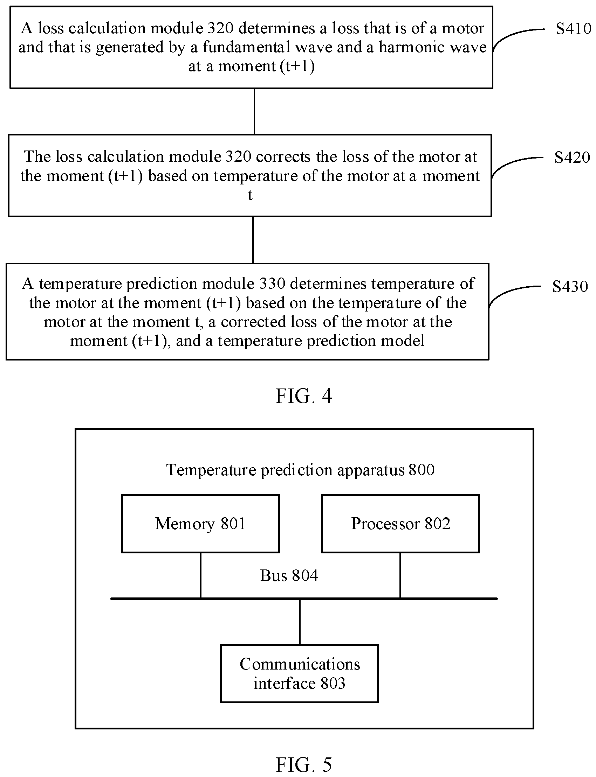

With reference to a specific example in FIG. 4, the following uses an example of the temperature prediction apparatus 300 shown in FIG. 3 to provide a detailed description of a specific implementation process of the temperature prediction method provided in the embodiments of this application.

It should be understood that the example in FIG. 4 is merely intended to help a person skilled in the art understand embodiments of this application, and is not intended to limit embodiments of this application to a specific value or a specific scenario in FIG. 4. A person skilled in the art clearly can make various equivalent modifications or changes according to the examples described above, and such modifications or changes also fall within the scope of embodiments of this application.

FIG. 4 is a schematic flowchart of another temperature prediction method according to an embodiment of this application. Referring to FIG. 4, the method may include steps 410 to 430. Steps 410 to 430 are separately described below in detail.

Step 410: The loss calculation module 320 determines a loss $Q$ that is of the motor and that is generated by a fundamental wave and a harmonic wave at a moment (t+1).

In a possible implementation, the loss calculation module 320 may determine, according to a formula (1) shown below, the loss $Q$ that is of the motor and that is generated by the fundamental wave and the harmonic wave at the moment (t+1).

$$Q = Q^0 \times f \tag{1}$$

where $Q$ indicates a total loss that is of the motor and that is generated by the fundamental wave and the harmonic wave;

$Q^0$ indicates a loss that is of the motor and that is generated by the fundamental wave; and

$f$ indicates a coefficient.

It should be understood that the loss $Q^0$ that is of the motor and that is generated by the fundamental wave may include any one or combination of a plurality of the following: a coil loss $Q^1_{coil}$ that is of the motor and that is generated by the fundamental wave, a stator loss $Q^1_{stator}$ that is of the motor and that is generated by the fundamental wave, a rotor loss $Q^1_{rotor}$ that is of the motor and that is generated by the fundamental wave, and the like.

As an example, a formula (2) lists a formula for calculating the stator loss $Q^1_{stator}$ that is of the motor and that is generated by the fundamental wave.

$$Q^1_{stator} = (a^1 k^1_{stator} + b^1 (k^1_{stator})^2)(1000\psi_f + c^1 i^1_{ao})^2 \tag{2}$$

where $Q^1_{stator}$ indicates the stator loss that is of the motor and that is generated by the fundamental wave;

$a^1$, $k^1_{stator}$, $b^1$, and $c^1$ indicate coefficients;

$\psi_f$ indicates a magnetic chain of a rotor; and

$i^1_{ao}$ indicates an amplitude value of a current at a fundamental wave frequency.

As an example, a formula (3) lists a formula for calculating the rotor loss $Q^1_{stator}$ that is of the motor and that is generated by the fundamental wave.

$$Q^1_{rotor} = (a^1 k^1_{rotor} + b^1 (k^1_{rotor})^2)(1000\psi_f + c^1 i^1_{ao})^2 \tag{3}$$

As an example, a formula (4) lists a formula for calculating the coil loss $Q_{coil\text{-}1}$ that is of the motor and that is generated by the fundamental wave.

$$Q_{coil}^1 = (1 + k_{coil}^1)(i_{ao}^1)^2 R_s \qquad (4)$$

where $R_s$ indicates phase resistance.

In another possible implementation, the loss calculation module 320 may further separately calculate a loss $Q^1$ that is of the motor and that is generated by the fundamental wave and a loss $Q^k$ that is of the motor and that is generated by the harmonic wave, and determine, according to the following formula (5), the loss $Q$ that is of the motor and that is generated by the fundamental wave and the harmonic wave at the moment (t+1).

$$Q = Q^1 + Q^k \qquad (5)$$

where $Q^k$ indicates a loss that is of the motor and that is generated by $k$ times of harmonic wave frequencies.

It should be understood that the loss $Q^k$ that is of motor and that is generated by the harmonic wave may include any one or combination of a plurality of the following: a coil loss $Q_{coil}^k$ that is of the motor and that is generated by the harmonic wave, a stator loss $Q_{stator}^k$ that is of the motor and that is generated by the harmonic wave, a rotor loss $Q_{rotor}^k$ that is of the motor and that is generated by the harmonic wave, and the like.

As an example, formulas (6) to (8) respectively show possible manners of calculating $Q_{coil}^k$, $Q_{stator}^k$, and $Q_{rotor}^k$.

$$Q_{coil}^k = \sum_{k=1}^{\infty} (1 + (k_{coil}^k)^2)(i_{ao}^k)^2 R_s \qquad (6)$$

where $i_{ac}^k$ indicates amplitude values of a harmonic wave current at k times of harmonic wave frequencies;

$k_{coil}^k$ is a coefficient; and

$Q_{coil}^k$ indicates a total coil loss that is of the motor and that is generated by $k$ times of harmonic wave frequencies.

$$Q_{stator}^k = \sum_{k=1}^{\infty} (a^k k_{stator}^k + b^k (k_{stator}^k)^2)(c^k i_{ao}^k)^2 \qquad (7)$$

where $a^k$, $b^k$, $c^k$, and $k_{stator}^k$ are coefficients; and

$Q_{stator}^k$ indicates a total stator loss that is of the motor and that is generated by $k$ times of harmonic wave frequencies.

$$Q_{rotor}^k = \sum_{k=1}^{\infty} (a^k k_{rotor}^k + b^k (k_{rotor}^k)^2)(c^k i_{ao}^k)^2 \qquad (8)$$

where $Q_{rotor}^k$ indicates a total rotor loss that is of the motor and that is generated by $k$ times of harmonic wave frequencies; and

$k_{rotor}^k$ is a coefficient.

In the foregoing formulas, the amplitude values $i_{ao}^k$ of the harmonic wave current at the $k$ times of harmonic wave frequencies are determined according to the following formula (9).

$$i_{ao}^k = \sqrt{(\tilde{i}_d^k)^2 + (\tilde{i}_q^k)^2} \qquad (9)$$

where $\tilde{i}_d^k$ indicates a component that is of the harmonic wave current at *k* times of harmonic wave frequencies and that is in a direction *d* in the *dq* rotating coordinate system; and

$\tilde{i}_q^k$ indicates a component that is of the harmonic wave current at *k* times of harmonic wave frequencies and that is in a direction *q* in the *dq* rotating coordinate system.

Specifically, an implementation process of determining $\tilde{i}_d^k$ and $\tilde{i}_q^k$ is described below in detail.

1. The voltage harmonic wave analysis module 340 determines the sum $u_{ao}^k$ of amplitude values of a voltage at *k* times of harmonic wave frequencies based on the control signal output by the motor controller 310.

As an example, the voltage harmonic wave analysis module 340 may determine $u_{ao}^k$ according to a formula (10) shown below:

$$u_{ao}^k = \sum_{s=0}^{\pm\infty} \sum_{n=0}^{\pm\infty} \frac{\sqrt{3}}{3} \lambda_n A_{sn} e^{j(s\omega_c + n\omega_m)t} \tag{10}$$

where *n* indicates a sideband harmonic wave coefficient;
*s* indicates a baseband harmonic wave coefficient;
*j* indicates a complex number;
$\omega_c$ indicates an angular frequency of a carrier;
$\omega_m$ indicates an angular frequency of a modulation wave; and
$\lambda_n$ and $A_{sn}$ may be determined according to formulas (11) and (12).

$$\lambda_n = 1 - e^{-j2n\pi/3} \tag{11}$$

$$A_{sn} = \frac{1}{2\pi^2} \{ \int_0^{\pi/3} \int_{\theta_{a1}}^{\theta_{a2}} U_{dc} e^{-j(sx+ny)} dxdy + \int_{\pi/3}^{2\pi/3} \int_{\theta_{b1}}^{\theta_{b2}} U_{dc} e^{-j(sx+ny)} dxdy + $$
$$\int_{2\pi/3}^{\pi} \int_{\theta_{c1}}^{\theta_{c2}} U_{dc} e^{-j(sx+ny)} dxdy + \int_{\pi}^{4\pi/3} \int_{\theta_{a1}}^{\theta_{a2}} U_{dc} e^{-j(sx+ny)} dxdy + \tag{12}$$
$$\int_{4\pi/3}^{5\pi/3} \int_{\theta_{b1}}^{\theta_{b2}} U_{dc} e^{-j(sx+ny)} dxdy + \int_{5\pi/3}^{2\pi} \int_{\theta_{c1}}^{\theta_{c2}} U_{dc} e^{-j(sx+ny)} dxdy \}$$

where $U_{dc}$ indicates a direct-current bus voltage.

2. The voltage harmonic wave analysis module 340 converts $u_{ao}^k$ into calculated values $\tilde{u}_d^k$ and $\tilde{u}_q^k$ of a harmonic wave voltage component in the dq rotating coordinate system.

3. The current harmonic wave analysis module 350 determines the amplitude values $\tilde{i}_{ao}^k$ of the harmonic wave current at k times of harmonic wave frequencies based on coordinates of $\tilde{u}_d^k$ and $\tilde{u}_q^k$.

As an example, the current harmonic wave analysis module 350 may determine $\tilde{i}_d^k$ and $\tilde{i}_q^k$ according to a

formula (13).

$$\begin{cases} \tilde{u}_d^k = R_s \tilde{i}_d^k + L_d \dfrac{d\,\tilde{i}_d^k}{dt} - L_q \omega \tilde{i}_q^k \\[4mm] \tilde{u}_q^k = R_s \tilde{i}_q^k + L_q \dfrac{d\,\tilde{i}_q^k}{dt} + \omega\left( L_d \tilde{i}_d^k + \psi_f \right) \end{cases} \qquad (13)$$

where $L_d$ indicates d-axis inductance;
$\omega$ indicates a rotation speed of the motor; and
$L_q$ indicates q-axis inductance.

Step 420: The loss calculation module 320 corrects the loss $Q$ of the motor at the moment (t+1) based on temperature of the motor at a moment t.

It should be understood that the temperature of the motor at the moment t may include any one or combination of a plurality of the following: coil temperature of the motor, stator/rotor temperature of the motor, magnetic steel temperature of the motor, and the like.

There are a plurality of specific implementations in which the loss calculation module 320 obtains the temperature of the motor at the moment t. This is not specifically limited in this embodiment of this application. In a possible implementation, the loss calculation module 320 may obtain a temperature feedback signal (that is, temperature obtained through calculation by the temperature prediction module 330) from the temperature prediction module 330 by using the motor controller 310, where the temperature feedback signal includes the temperature of the motor at the moment t. In another possible implementation, the loss calculation module 320 may directly obtain the temperature of the motor at the moment t from the temperature sensor 360.

In this embodiment of this application, the loss calculation module 320 may correct, based on the temperature of the motor at the moment t, the loss $Q$ that is of the motor at the moment (t+1) and that is determined in step 410. For a specific loss $Q$ of the motor at the moment (t+1), refer to the description in step 410. Details are not described herein again.

A specific implementation process of correcting the loss $Q$ of the motor at the moment (t+1) is described below in detail.

Specifically, the loss calculation module 320 may correct a stator/rotor loss of the motor at the moment (t+1) based on the stator/rotor temperature of the motor at the moment t, or may correct a coil loss of the motor at the moment (t+1) based on the coil temperature of the motor at the moment t.

In a possible implementation, a specific implementation of the foregoing correction process is described in detail by using an example of a loss that is of the motor and that is generated by the harmonic wave.

For example, the loss calculation module 320 may correct a coefficient $k_{coil}^k$ based on the coil temperature of the motor at the moment t, and correct the coil loss of the motor at the moment (t+1) based on a corrected coefficient $k_{coil}^k$ to obtain a corrected coil loss of the motor at the moment (t+1).

For another example, the loss calculation module 320 may correct a coefficient $k_{stator}^k$ based on the stator temperature of the motor at the moment t, and correct the stator loss of the motor at the moment (t+1) based on a corrected coefficient $k_{stator}^k$ to obtain a corrected stator loss of the motor at the moment (t+1).

For another example, the loss calculation module 320 may correct a coefficient $k_{rotor}^k$ based on the rotor temperature of the motor at the moment t, and correct the rotor loss of the motor at the moment (t+1) based on a corrected coefficient $k_{rotor}^k$ to obtain a corrected rotor loss of the motor at the moment (t+1).

It should be understood that any one of the coefficients $k_{coil}^k$, $k_{stator}^k$, and $k_{rotor}^k$ may be corrected, or any combination of a plurality of coefficients may be corrected. This is not specifically limited in this application.

Step 430: The temperature prediction module 330 determines temperature of the motor at the moment (t+1) based on the temperature of the motor at the moment t, a corrected loss of the motor at the moment (t+1), and a temperature prediction model.

In a possible implementation, a specific implementation of determining the temperature of the motor at the moment (t+1) is described in detail by using an example of a loss that is of the motor and that is generated by the harmonic wave.

As an example, the temperature prediction module 330 may determine coil temperature of the motor at the moment (t+1) based on the corrected coil loss of the motor at the moment (t+1), the coil temperature of the motor at the moment t, and the temperature prediction model. As another example, the temperature prediction module 330 may determine stator temperature of the motor at the moment (t+1) based on the corrected stator loss of the motor at the moment (t+1), the stator temperature of the motor at the moment t, and the temperature prediction model. As another example, the temperature prediction module 330 may determine rotor temperature of the motor at the moment (t+1) based on the corrected rotor loss of the motor at the moment (t+1), the rotor temperature of the motor at the moment t, and the temperature prediction model.

The foregoing describes the method in embodiments of this application in detail with reference to FIG. 1 to FIG. 4. The following describes an apparatus embodiment of this application in detail with reference to FIG. 5. It should be understood that the temperature prediction apparatus in embodiments of this application may perform various methods in the foregoing embodiments of this application, that is, for specific working processes of the following products, refer to corresponding processes in the foregoing method embodiments.

FIG. 5 is a schematic diagram of a hardware structure of a temperature prediction apparatus 800 according to an embodiment of this application.

The temperature prediction apparatus 800 shown in FIG. 5 may include a memory 801, a processor 802, a communications interface 803, and a bus 804. The memory 801, the processor 802, and the communications interface 803 are communicatively connected with each other by using the bus 804.

The memory 801 may be a read-only memory (read-only memory, ROM), a static storage device, or a random access memory (random access memory, RAM). The memory 801 may store a program. When the program stored in the memory 801 is performed by the processor 802, the processor 802 and the communications interface 803 are configured to perform the steps of the temperature prediction method in embodiments of this application, for example, the steps of the temperature prediction method shown in FIG. 2 or FIG. 4 may be performed.

The processor 802 may be a general-purpose CPU, a microprocessor, an ASIC, a GPU, or one or more integrated circuits, to perform a related program, to implement a function that needs to be performed by a unit in the temperature prediction apparatus shown in FIG. 3 in the embodiments of this application, or perform the temperature prediction method in the method embodiments of this application.

The processor 802 may further be an integrated circuit chip and has a signal processing capability. In an implementation process, the steps of the temperature prediction method in the embodiments of this application may be completed by using an integrated logic circuit of hardware in the processor 802 or instructions in a form of software.

The foregoing processor 802 may further be a general-purpose processor, a DSP, an ASIC, an FPGA or another programmable logic device, a discrete gate or transistor logic device, or a discrete hardware component. The processor 802 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash, a read-only memory, a programmable read-only memory, an electrically erasable programmable memory, or a register. The storage medium is located in the memory 801. The processor 802 reads information in the memory 801, and completes, with reference to hardware of the processor 802, a function that needs to be performed by a unit included in the temperature prediction apparatus in embodiments of this application, or performs the temperature prediction method in the method embodiments of this application.

The communications interface 803 uses, for example, but unnecessarily uses a transceiver apparatus such as a transceiver to implement communication between the temperature prediction apparatus 800 and another device or a communications network.

The bus 804 may include a channel for transmitting information between components (such as the memory 801, the processor 802, and the communications interface 803) of the temperature prediction apparatus 800.

It should be noted that although the temperature prediction apparatus 800 shows only a memory, a processor, and a communications interface, in a specific implementation process, a person skilled in the art should understand that the temperature prediction apparatus 800 may further include another component necessary for implementing normal operation. In addition, based on a specific requirement, a person skilled in the art should understand that the temperature prediction apparatus 800 may further include a hardware component for implementing another additional function.

Moreover, a person skilled in the art should understand that the temperature prediction apparatus 800 may alternatively include only a component necessary for implementing embodiments of this application, and does not need to include all components shown in FIG. 5.

An embodiment of this application further provides a chip, and the chip includes a transceiver unit and a processing unit. The transceiver unit may be an input/output circuit and a communications interface. The processing unit is a processor, a microprocessor, or an integrated circuit integrated on the chip. The chip may perform the method in the foregoing method embodiments.

In a specific implementation process, the chip may be implemented in a form of a central processing unit (central processing unit, CPU), a micro controller unit (micro controller unit, MCU), a micro processing unit (micro processing unit, MPU), a digital signal processor (digital signal processor, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

An embodiment of this application further provides a computer-readable storage medium that stores instructions. When the instructions are executed, the method in the foregoing method embodiments is performed.

The computer-readable storage medium stores program code. When the computer program code is run on a computer, the computer is enabled to perform the methods in the foregoing aspects. The computer-readable storage medium includes but is not limited to one or more of the following: a read-only memory (ROM), a programmable ROM (PROM), an erasable PROM (EPROM), a Flash, an electrically EPROM (EEPROM), and a hard drive.

An embodiment of this application further provides a computer program product that includes instructions. When the instructions are executed, the method in the foregoing method embodiments is performed.

It should be understood that, the processor in embodiments of this application may be a central processing unit (CPU), or may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash. The volatile memory may be a random access memory (RAM) and is used as an external cache. By way of example but not limitative description, a plurality of forms of random access memories (RAM) can be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification is merely an association relationship that describes associated objects, and indicates that three relationships may exist. For example, A and/or B may indicate three cases: only A exists, both A and B exist, and only B exists, where A and B may be singular or plural numbers. In addition, the character "/" in this specification usually indicates that associated objects are in an "or" relationship, but may alternatively indicate an "and/or" relationship. For details, refer to the foregoing and later descriptions for understanding.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A temperature prediction method, comprising:

    determining a loss of a motor based on information about a motor controller, wherein the loss of the motor comprises a first loss and a second loss, and the first loss is a loss generated by a fundamental wave component of a current of the motor; and
    determining temperature of the motor based on the loss of the motor and a temperature prediction model.

2. The method according to claim 1, wherein the second loss is a loss generated by a harmonic wave component of the current of the motor.

3. The method according to claim 1 or 2, wherein the determining a loss of a motor based on information about a motor controller comprises:

    determining the first loss based on the fundamental wave component of the current, and
    obtaining the loss of the motor based on the first loss and a first coefficient.

4. The method according to claim 2, wherein the determining a loss of a motor based on information about a motor controller comprises:

> determining the first loss based on the fundamental wave component of the current,
> determining the second loss based on the harmonic wave component of the current, and
> obtaining the loss of the motor based on the first loss and the second loss.

5. The method according to claim 4, wherein the information about the motor controller is a voltage vector in a dq rotating coordinate system, and
   before the determining the second loss based on the harmonic wave component of the current, the method further comprises:

> obtaining the voltage vector in the dq rotating coordinate system from the motor controller;
> obtaining a harmonic wave component of a voltage based on the voltage vector in the dq rotating coordinate system; and
> obtaining the harmonic wave component of the current based on the harmonic wave component of the voltage.

6. The method according to any one of claims 1 to 5, wherein the temperature of the motor is temperature of the motor at a moment t, and
   the method further comprises:

> correcting the loss of the motor based on the temperature of the motor at the moment t to obtain a corrected loss of the motor; and
> determining temperature of the motor at a moment (t+1) based on the corrected loss of the motor, the temperature of the motor at the moment t, and the temperature prediction model, wherein the moment t is a previous moment of the moment (t+1).

7. The method according to any one of claims 1 to 6, wherein the loss of the motor comprises one or more of the following: a coil loss of the motor, a stator/rotor loss of the motor, and a magnetic steel loss of the motor

8. The method according to any one of claims 1 to 7, wherein the temperature of the motor at the moment t comprises one or more of the following: coil temperature of the motor at the moment t, stator/rotor temperature of the motor at the moment t, and magnetic steel temperature of the motor at the moment t.

9. The method according to any one of claims 1 to 8, wherein the temperature prediction model is any one of the following: an equivalent thermal resistance network model, a neural network model, a linear least squares model, or a nonlinear least squares model.

10. A temperature prediction apparatus, comprising:

> a loss calculation module, configured to determine a loss of a motor based on information about a motor controller, wherein the loss of the motor comprises a first loss and a second loss, and the first loss is a loss generated by a fundamental wave component of a current of the motor; and
> a temperature prediction module, configured to determine temperature of the motor based on the loss of the motor and a temperature prediction model.

11. The prediction apparatus according to claim 10, wherein the second loss is a loss generated by a harmonic wave component of the current of the motor.

12. The prediction apparatus according to claim 10 or 11, wherein the loss calculation module is specifically configured to:

> determine the first loss based on the fundamental wave component of the current, and
> obtain the loss of the motor based on the first loss and a first coefficient.

13. The prediction apparatus according to claim 11, wherein the loss calculation module is specifically configured to:

> determine the first loss based on the fundamental wave component of the current,
> determine the second loss based on the harmonic wave component of the current, and
> obtain the loss of the motor based on the first loss and the second loss.

14. The prediction apparatus according to claim 13, wherein the information about the motor controller is a voltage vector in a dq rotating coordinate system, and
the prediction apparatus further comprises:

an obtaining module, configured to obtain the voltage vector in the dq rotating coordinate system from the motor controller;
a voltage harmonic wave analysis module, configured to obtain a harmonic wave component of a voltage based on the voltage vector in the dq rotating coordinate system; and
a current harmonic wave analysis module, configured to obtain the harmonic wave component of the current based on the harmonic wave component of the voltage.

15. The prediction apparatus according to any one of claims 10 to 14, wherein the temperature of the motor is temperature of the motor at a moment t;

the loss calculation module is further configured to correct the loss of the motor based on the temperature of the motor at the moment t to obtain a corrected loss of the motor; and
the temperature prediction module is further configured to determine temperature of the motor at a moment (t+1) based on the corrected loss of the motor, the temperature of the motor at the moment t, and the temperature prediction model, wherein the moment t is a previous moment of the moment (t+1).

16. The prediction apparatus according to any one of claims 10 to 15, wherein the loss of the motor comprises one or more of the following: a coil loss of the motor, a stator/rotor loss of the motor, and a magnetic steel loss of the motor

17. The prediction apparatus according to any one of claims 10 to 16, wherein the temperature of the motor at the moment t comprises one or more of the following: coil temperature of the motor at the moment t, stator/rotor temperature of the motor at the moment t, and magnetic steel temperature of the motor at the moment t.

18. The prediction apparatus according to any one of claims 10 to 17, wherein the temperature prediction model is any one of the following: an equivalent thermal resistance network model, a neural network model, a linear least squares model, or a nonlinear least squares model.

19. A temperature prediction apparatus, comprising a processor and a memory, wherein the memory is configured to store computer-executable instructions, and when the prediction apparatus runs, the processor runs the computer-executable instructions in the memory to perform the temperature prediction method according to any one of claims 1 to 9.

20. A motor controller, comprising the temperature prediction apparatus according to any one of claims 10 to 18 or the temperature prediction apparatus according to claim 19.

21. A powertrain, comprising a motor and the motor controller according to claim 20.

22. A vehicle, comprising the powertrain according to claim 21.

23. A computer-readable storage medium, comprising a computer program, wherein when the computer program runs on a computer, the computer is enabled to perform the temperature prediction method according to any one of claims 1 to 9.

Vehicle

Powertrain

| Motor | Motor controller |
| Stator | Rotor |
| Inverter |

Battery pack

Wheel

FIG. 1

Determine a loss of a motor based on information about a motor controller, where the loss of the motor includes a first loss and a second loss, and the first loss is a loss generated by a fundamental wave component of a current of the motor — S210

Determine temperature of the motor based on the loss of the motor and a temperature prediction model — S220

FIG. 2

300

S1 →
S2 →
Sn →

Voltage
harmonic
wave analysis
module 340

→

Current
harmonic
wave analysis
module 350

→

Loss
calculation
module 320

→

Temperature
prediction
module 330

→

Motor
controller 310

Temperature
sensor 360

Temperature
feedback
signal

Control
signal

FIG. 3

A loss calculation module 320 determines a loss that is of a motor and that is generated by a fundamental wave and a harmonic wave at a moment (t+1) ⟋ S410

The loss calculation module 320 corrects the loss of the motor at the moment (t+1) based on temperature of the motor at a moment t ⟋ S420

A temperature prediction module 330 determines temperature of the motor at the moment (t+1) based on the temperature of the motor at the moment t, a corrected loss of the motor at the moment (t+1), and a temperature prediction model ⟋ S430

FIG. 4

Temperature prediction apparatus 800

Memory 801

Processor 802

Bus 804

Communications interface 803

FIG. 5

## INTERNATIONAL SEARCH REPORT

| International application No. |
|---|
| **PCT/CN2020/105791** |

**A. CLASSIFICATION OF SUBJECT MATTER**

H02P 21/14(2016.01)i;  G06F 30/00(2020.01)i

According to International Patent Classification (IPC) or to both national classification and IPC

**B. FIELDS SEARCHED**

Minimum documentation searched (classification system followed by classification symbols)

H02P, G06F

Documentation searched other than minimum documentation to the extent that such documents are included in the fields searched

Electronic data base consulted during the international search (name of data base and, where practicable, search terms used)

CNPAT, EPODOC, WPI, CNKI, ISI: 电机, 电动机, 基波, 谐波, 电流, 温度, 损耗, 模型, 车, electric, motor, electromotor, fundamental, harmonic, wave, current, temperature, loss, model, EV, vehicle, car

**C. DOCUMENTS CONSIDERED TO BE RELEVANT**

| Category* | Citation of document, with indication, where appropriate, of the relevant passages | Relevant to claim No. |
|---|---|---|
| Y | CN 111211719 A (ZHUZHOU CRRC TIMES ELECTRIC CO., LTD.) 29 May 2020 (2020-05-29)<br>description paragraphs [0005]-[0016], [0023]-[0024], figures 1-3 | 1-23 |
| Y | 徐蓉 (XU, Rong). "永磁同步电机损耗分析和温度计算 (Loss Analysis and Temperature Calculation of Permanent Magnet Synchronous Motor)"<br>中国优秀硕士学位论文全文数据库 工程科技II (Science & Engineering (B), China Master's Theses Full-Text Database), No. 3, 15 March 2018 (2018-03-15),<br>sections 2.4 and 3.4 | 1-23 |
| A | CN 111277192 A (NANCAL TECHNOLOGY CO., LTD.) 12 June 2020 (2020-06-12)<br>entire document | 1-23 |
| A | CN 104537154 A (TIANJIN UNIVERSITY) 22 April 2015 (2015-04-22)<br>entire document | 1-23 |
| A | US 2020119625 A1 (GUANGZHOU AUTOMOBILE GROUP CO., LTD.) 16 April 2020 (2020-04-16)<br>entire document | 1-23 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 April 2021** | **30 April 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2020/105791** |

| Patent document cited in search report | | | Publication date (day/month/year) | Patent family member(s) | | | Publication date (day/month/year) |
| --- | --- | --- | --- | --- | --- | --- | --- |
| CN | 111211719 | A | 29 May 2020 | None | | | |
| CN | 111277192 | A | 12 June 2020 | None | | | |
| CN | 104537154 | A | 22 April 2015 | CN | 104537154 | B | 05 December 2017 |
| US | 2020119625 | A1 | 16 April 2020 | None | | | |

Form PCT/ISA/210 (patent family annex) (January 2015)